# EUROPEAN PATENT APPLICATION

(11) **EP 1 855 226 A1**
(43) Date of publication of application: **14.11.2007**
(21) Application number: 06254687.4
(22) Date of filing: 08.09.2006
(51) Int. Cl.: G06F 21/02

(54) **Security system of flash memory and method thereof**

(30) Priority: 09.05.2006 US 435888
(71) Applicant: Phison Electronics Corp., Chutung, Hsinchu 310 (TW); Just Rams Plc, Harrow, Middlesex HA1 1RA (GB)
(72) Inventor: Chen, Horace, Chutung, Hsinchu, Taiwan 310 (TW); Kotecha, Sanjiv, Harrow, Middlesex, HA1 1RA (GB)
(74) Representative: Knott, Stephen Gilbert

(57) **Abstract**

A security system for a flash memory and a method thereof are disclosed. The method of security system for a flash memory, includes the steps of a) providing a predetermined limit signal (601) for a host system (60); b) defining a specific signal (612) stored in the flash memory (61) installed with a identification program (611) for indicating a capacity of the flash memory (61); c) comparing the specific signal (612) with the predetermined limit signal (601) while the flash memory (61) is connected to the host system (60); d) inhibiting access to the identification program (611) of the flash memory (61) if the specific signal (612) does not correspond to the predetermined limit signal (601), but a residual space of the flash memory (61) is available.

## Description

The present invention relates to a security system for a memory, and more particularly, to a security system for a flash memory and a method thereof.

Currently available memory systems have seen a large increase in the use thereof. For normal users, a typical available memory system will allow access to various stored data files for running multiple programs and allow the user to access resources. Access to these types of available memory systems is typically what is referred to as "unrestricted". However, for a restricted access system that may contain confidential information, the user may be provided access to resources that are billed on a time-use, etc. Currently available Memory systems are typically interfaced with a microprocessor core, which microprocessor core is operable to access any and all locations in the memory by generating an appropriate address. The processor requires access to the memory in order to both execute instructions and also read data from an address location or write data thereto.

In some situations, certain instructions are proprietary in nature and it is the desire of a manufacturer to protect that code. It is not the execution of the code that is to be protected but, rather, the ability of a user to gain access to the code for reverse engineering thereof to determine the functionality that is embedded within the code. In systems that have provided this protected memory to prevent access to data or programs stored in the memory, circuitry is provided for monitoring the contents of the Program Counter and generating an inhibit signal whenever the Program Counter is at a certain value. This inhibit signal inhibits access to certain portions of the memory.

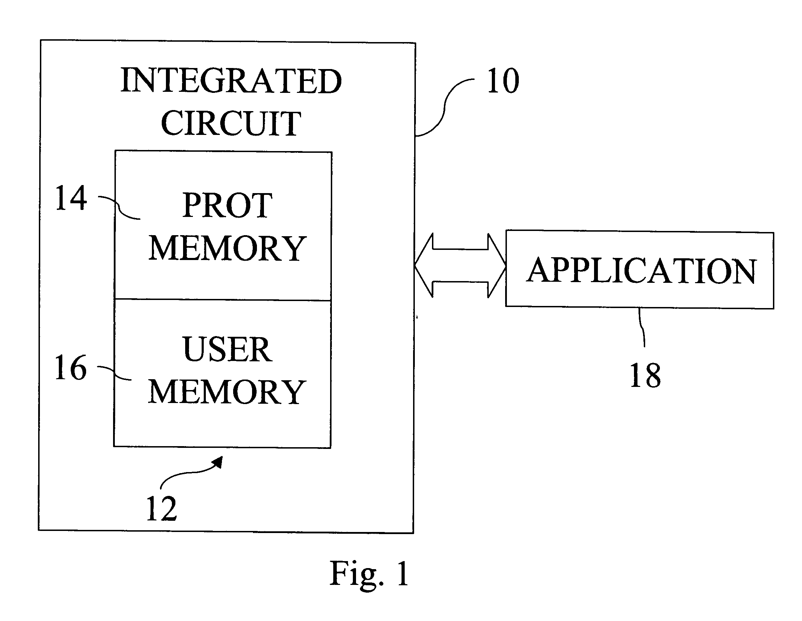

Please refer to Fig. 1. It illustrates a top-level diagram of a system utilizing the protected memory according to the prior art. An integrated circuit 10 is provided which has disposed therein a protected memory 12. The protected memory 12 has associated therewith a protected memory region 14 and a user memory region 16. The integrated circuit 10 can be interfaced to any type of application 18 which can be any type of integrated circuit or board level device that interfaces with the integrated circuit 10. This integrated circuit 10 could be a part of a PC board, which includes other integrated circuits or it could be a stand-alone integrated circuit that contains substantially all functionality needed to interface with the application 18. As will be described hereinbelow, the protected memory region 14 contains proprietary instructions that can be executed under the control of the user memory region 16. However, the user cannot, through program instructions stored in the user memory section 16, access information in the protected memory region 14 for retrieval therefrom for the purpose of viewing the instruction code or even the data stored in the protected memory region 14.

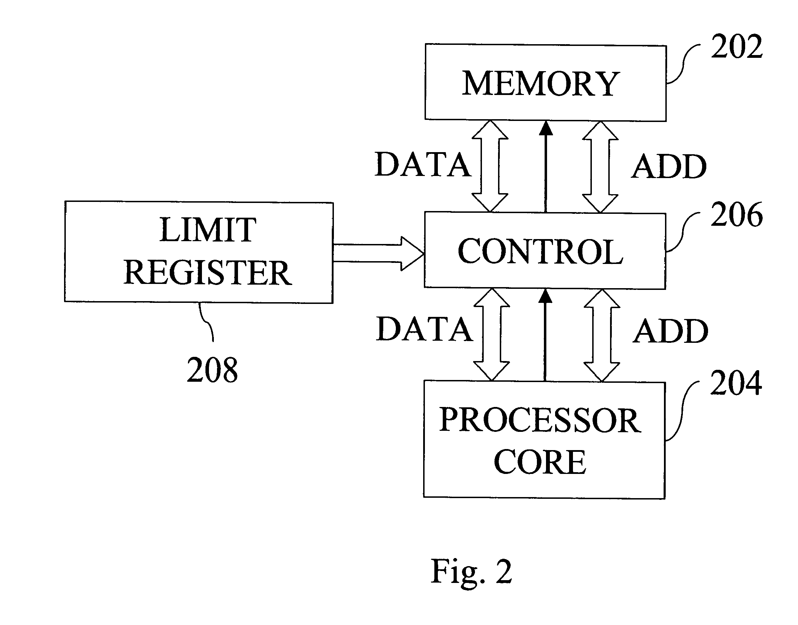

Fig. 2 further illustrates a block diagram of the interface between a memory block 202 and a processor core 204. The processor core 204 contains general processing architecture and is operable to generate addresses, receive data, generate various control functions, etc. Typically, this will contain a Program Counter for substantially stepping through various instructions that are retrieved from the memory 202. A control logic block 206 is disposed between the processor core 204 and the memory 202, this having associated therewith the various logic function to achieve the protected memory function described hereinbelow. The control logic block 206 is operable to interpret addresses received from the processor core 204 and compares them with information stored in a limit register 208. This limit register 208 is either mask programmed or it is electronically programmed as a Write-Once, Read-Many (WORM) memory that allows a limit to be input to the integrated circuit 10, which limit defines the boundary between the protected memory region 14 and the user memory region 16. The control logic block 206, as will be described further hereinbelow, is operable to monitor the contents of the address bus and determine whether the contents of the address bus are directed toward the operation of fetching data or attempting to fetch an instruction code, i.e., whether the contents of the address bus constitute the contents of the Program Counter. With this information, the control logic block can then determine whether access is to be allowed to the memory 202. If not, some types of inhibit or other protected operation is undertaken.

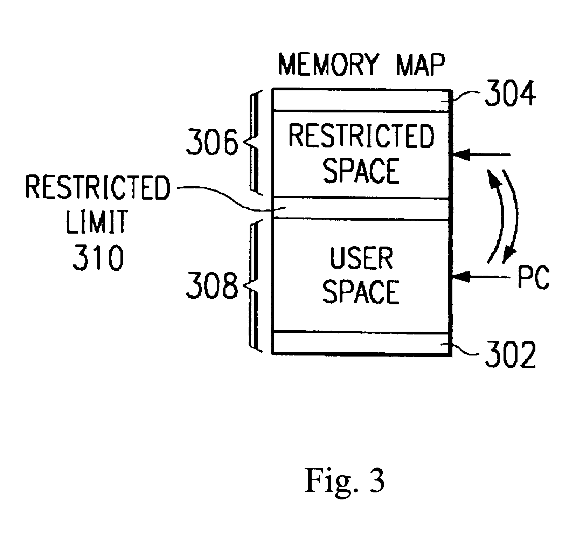

Referring now to FIG. 3, there is illustrated a diagrammatic view of a memory map for the memory 202. The memory 202, as is conventional, is comprised of a plurality of memory locations, which are accessible by generating an address. When the address is generated, a plurality of memory locations are accessed which typically constitute a "byte" of data, although any length is anticipated. For each address generated, one byte of data will be output. The memory map of FIG. 3 represents a sequence of byte locations from a lower byte location 302 to an upper byte location 304. The memory is divided into a restricted space and a user space, the restricted space comprising memory locations 306 and the user space comprising memory locations 308. There is one addressable memory location, memory location 310, which constitutes the boundary memory location. The address of this boundary location constitutes an address that is in the restricted space 306 and which address comprises the "limit" for the operation, as will be described in more detail hereinbelow.
The Program Counter (PC) is basically a pointer that defines an address for a particular instruction to be carried out. When this Program Counter address is generated, it is placed onto the address bus and the information at that address location extracted therefrom and routed to the processor core 204 for operations thereon. In the execution of the various instructions, the Program Counter may actually jump from the user space 308 up the restricted space 306 to execute instructions therein. This is allowed in accordance with the embodiment herein to facilitate executing instructions in the restricted space 306 in response to a "call" instruction executed in the user space 308. However, instructions in the user space 308 cannot generate an address for the purpose of reading data from the restricted space 306 which would allow output of information stored in the restricted space from the system. The protective operation is operable to prevent such an operation from occurring.

Accordingly, the protected memory includes an address input and a memory space of addressable locations having a restricted area and a user area. Addressing one of the addressable locations therein results in the output of information therefrom in response to the receipt of an associated address on the address input. A logic device is provided for determining if a received address on the address input corresponds to an attempt to access an addressable location in the restricted space for output of information therefrom as the result of execution of a program instruction from the user area by an external processor. An inhibit device is provided for inhibiting access to the addressable location if a negative determination is made by the logic device.

However, in practice, the prior art should execute security system by means of addressing and should introduce a large memory space of addressable memory locations. On the other hand, it is difficult to implement. Hence, it needs to provide a security system in a flash memory, which provides a specific space value for identifying by a host system, simplifies the identifying process, is capable of achieving the purpose of security system, and can rectify those drawbacks of the prior art and solve the above problems.

This paragraph extracts and compiles some features of the present invention; other features will be disclosed in the follow-up paragraph. It is intended to cover various modifications and similar arrangements included within the spirit and scope of the appended claims, and this paragraph also is considered to refer.

Accordingly, the prior art is limited by the above problems. It is an object of the present invention to provide a security system for a flash memory, which introduces a specific signal indicating a capacity of a memory space for identifying by a host system, simplifies the identifying process, is capable of achieving the purpose of security system, and can rectify those drawbacks of the prior art and solve the above problems.

In accordance with an aspect of the present invention, the security system of a flash memory includes a memory space installed with an identification program and stored with a specific signal for indicating a capacity of the memory space; a logic device for determining if the specific signal corresponds to a predetermined limit signal of an external processor; and an inhibit device for inhibiting access to the identification program of the memory space if a negative determination is made by the logic device.

Certainly, the logic device can be a comparator for comparing the specific signal with the predetermined limit signal of the external processor.

Preferably, the inhibit device is operable to inhibit output of information stored in the memory space when the negative determination is made by the logic device.

Preferably, the external processor further includes a limit register for storing the predetermined limit signal.

Preferably, the external processor further includes means for altering the information stored in the limit register.

Certainly, the specific signal can be unchangeable after being defined in manufacturing of the flash memory.

Preferably, the specific signal is stored in a file allocation table (FAT) of the flash memory.

In accordance with another aspect of the present invention, the security system for a flash memory includes a host system having a predetermined limit signal; a flash memory space installed with an identification program and stored with a specific signal for indicating a capacity of the flash memory space; a comparator for comparing the specific signal with the predetermined limit signal while the host system and the flash memory are connected; an inhibit device for inhibiting access to the identification program of the flash memory space if a negative determination is made by the comparator.

Certainly, the inhibit device can be operable to inhibit output of information stored in the flash memory space when the negative determination is made by the comparator.

Preferably, the host system further includes a limit register for storing the predetermined limit signal.

Preferably, the host system further includes means for altering the information stored in the limit register.

Preferably, the specific signal is unchangeable after being defined in manufacturing of the flash memory.

Preferably, the specific signal is stored in a file allocation table (FAT) of the flash memory.

It is another object of the present invention to provide a method of a security system for a flash memory, wherein a specific signal indicating a capacity of a memory space is introduced for identifying by a host system and simplifying the identifying process, thereby achieving the purpose of security system, and can rectify those drawbacks of the prior art and solve the above problems.

In accordance with the aspect of the present invention, the method of security system for a flash memory, includes the steps of a) providing a predetermined limit signal for a host system; b) defining a specific signal stored in the flash memory installed with a identification program for indicating a capacity of the flash memory; c) comparing the specific signal with the predetermined limit signal while the host system and the flash memory are connected; d) producing a negative determination if the specific signal does not correspond to the predetermined limit signal; and e) inhibiting access to the identification program of the flash memory.

Preferably, the step (e) further includes step e1) inhibiting access output of information stored in the flash memory.

Preferably, the specific signal is stored in a file allocation table (FAT) of the flash memory.

In accordance with another aspect of the present invention, the method of security system for a flash memory, includes the steps of a) providing a predetermined limit signal for a host system; b) defining a specific signal stored in the flash memory installed with a identification program for indicating a capacity of the flash memory; c) comparing the specific signal with the predetermined limit signal while the flash memory is connected to the host system; d) inhibiting access to the identification program of the flash memory if the specific signal does not correspond to the predetermined limit signal, but a residual space of the flash memory is available..

Preferably, the specific signal is stored in a file allocation table (FAT) of the flash memory.

The following is a more detailed description of some embodiments of the prior art and the invention, by way of example, reference being made to the accompanying drawings, in which:

Fig. 1 illustrates a block diagram of the overall system according to the prior art;

Fig. 2 illustrates a detailed diagram of the processor core and memory with the associated protected control logic according to the prior art;

Fig. 3 illustrates a diagrammatic view of the memory map for the restricted space and user space according to the prior art;

Fig.4 illustrates a security system of a flash memory according to the present invention.

Fig. 5 illustrates a method of a security system for a flash memory according to the present invention.

Fig.6 illustrates another embodiment of the security system of a flash memory according to the present invention.

Fig. 7 illustrates another embodiment of the method of a security system for a flash memory according to the present invention.

The present invention discloses a security system for a flash memory and a method thereof, and the objects and advantages of the present invention will become more readily apparent to those ordinarily skilled in the art after reviewing the following detailed description. The present invention needs not be limited to the following embodiment.

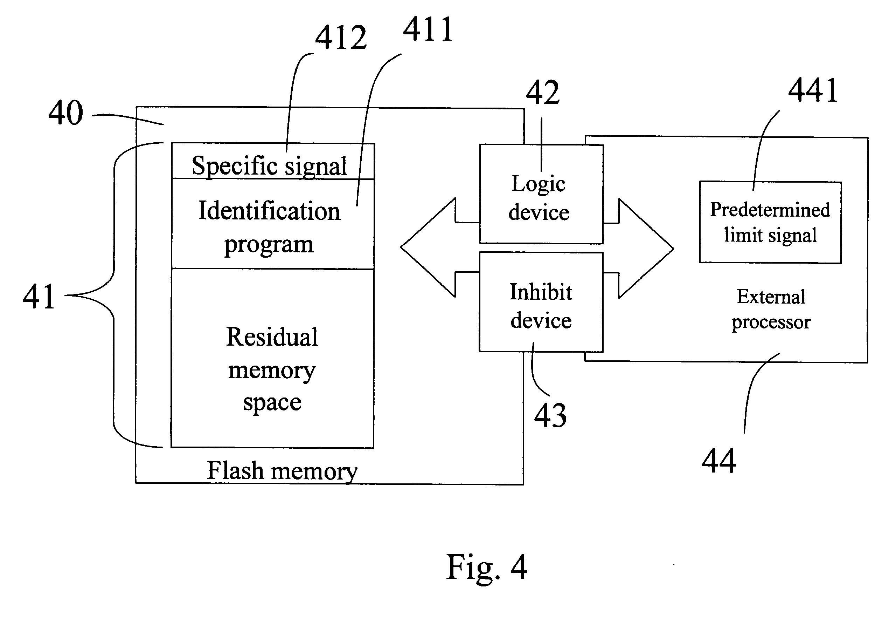

Please refer to Fig. 4. It illustrates a security system of a flash memory according to the present invention. As shown in Fig. 1, the security system of a flash memory 40 includes a memory space 41 having an identification program 411 and stored with a specific signal 412 for indicating a capacity of the memory space 41; a logic device 42 for determining if the specific signal 412 corresponds to a predetermined limit signal 441 of an external processor 44; and an inhibit device 43 for inhibiting access to the identification program 412 of the memory space 41 if a negative determination is made by the logic device 42.

In practice, the logic device 42 can be a comparator for comparing the specific signal 412 with the predetermined limit signal 441 of the external processor 44. When the negative determination is made by the logic device 42, i.e. the specific signal 412 cannot correspond to the predetermined limit signal 441, then the inhibit device 43 will be operable to inhibit output of information stored in the memory space 41, wherein the identification program 411 won't be executed by the external processor 44, and furthermore the external processor 44 can't load any information stored in the memory space 41. If the specific signal 412 corresponds to the predetermined limit signal 441, then the memory space 41 will be available for the external processor, wherein the external processor 44 will execute the identification program 411. Meanwhile, the external processor 44 further includes a limit register for storing the predetermined limit signal 411. Certainly, the external processor 44 further includes means for altering the information stored in the limit register. In the present invention, the specific signal 412 is unchangeable after being defined in manufacturing of the flash memory. In this embodiment, the specific signal 412 can be stored in a file allocation table (FAT) of the flash memory 40. Simply speaking, the memory space (byte) is adjustable and defined while the flash memory is manufactured. In the present invention, the external processor 44 will define plural predetermined limit signals 441 by the manufacturer for identifying the related flash memory devices. Meanwhile the 128M flash memory from the same manufacturer has a special signal, such as "128,111,111", to indicate a capacity of the flash memory. Certainly, the predetermined limit signal 441 of the external processor 44 should includes the same 8-byte value "128,111,111" for identifying the flash memory devices of the same manufacturer. When a user connects a flash memory with the external processor 44 of the present invention, the external processor 44 will detect the memory space of the flash memory by means of firmware program of a control device or a program of an operation system. If the memory space of the flash memory is not "128,111,111" bytes, the flash memory won't be loaded by the external processor 44, or some program of the flash memory won't be executed via the external processor, thereby achieving the purpose of security system.

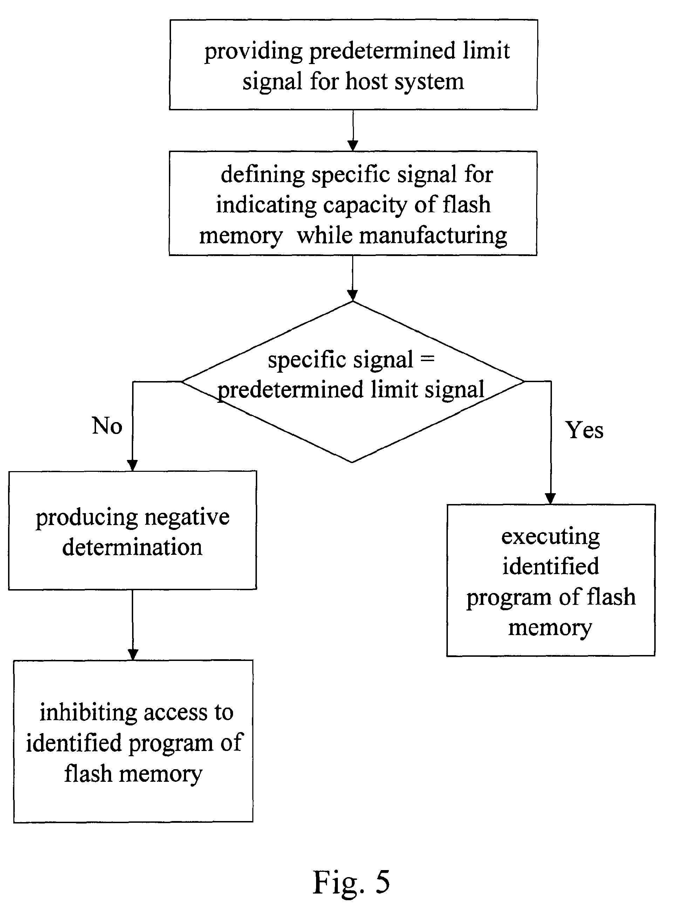

Please refer to Fig. 5. It illustrates a method of a security system for a flash memory according to the present invention. The method includes the steps of a) providing a predetermined limit signal for a host system; b) defining a specific signal stored in the flash memory installed with a identification program for indicating a capacity of the flash memory; c) comparing the specific signal with the predetermined limit signal while the host system and the flash memory are connected; d) producing a negative determination if the specific signal does not correspond to the predetermined limit signal; and e) inhibiting access to the identification program of the flash memory. Accordingly, when a flash memory device with an identification program of the present invention is manufactured by A manufacturer, the flash memory has a special signal, such as "128,111,111", to indicate a capacity of the flash memory. When the identification program is copied to another flash memory device manufactured by B manufacturer, the identification program won't be executed by the host system with the predetermined limit signal, wherein the flash memory device of B manufacturer doesn't have a special signal, such as "128,111,111", to indicate a capacity thereof. On the other hand, when the flash memory device of the present invention with a special signal is connected to a host system without the predetermined limit signal, the identification program of the flash memory device won't be executed, thereby achieving the purpose of security system.

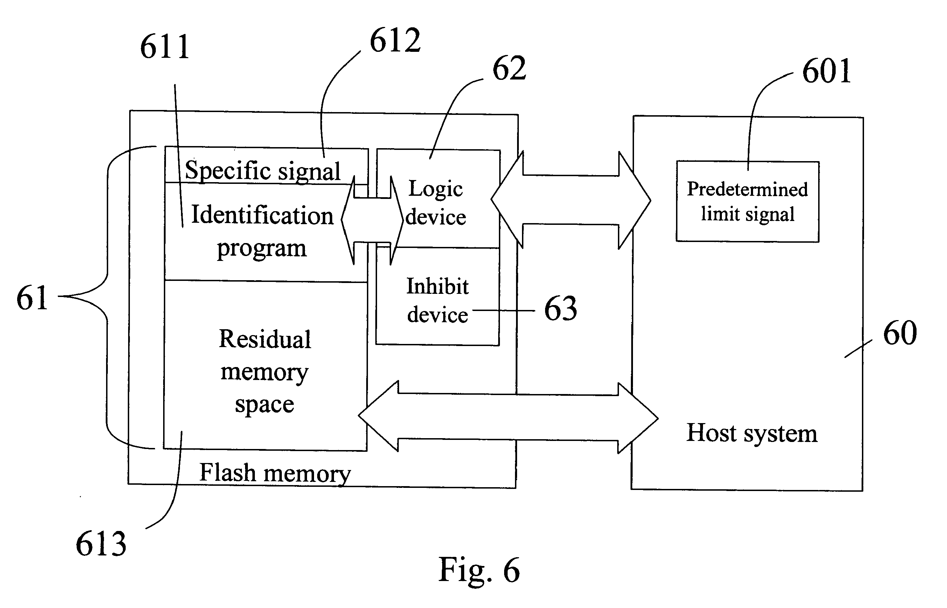

Please refer to Fig. 6. It illustrates another embodiment of the security system of a flash memory according to the present invention. As shown in Fig.6, the security system for a flash memory includes a host system 60 having a predetermined limit signal 601; a flash memory space 61 having an identification program 611 and stored with a specific signal 612 for indicating a capacity of the flash memory space 61; a comparator 62 for comparing the specific signal 612 with the predetermined limit signal 601 while the host system 60 and the flash memory are connected; an inhibit device 63 for inhibiting access to the identification program 611 of the flash memory space 61 if a negative determination is made by the comparator 62.

Similarly, when the negative determination is made by the comparator 62, i.e. the specific signal 612 cannot correspond to the predetermined limit signal 601, then the inhibit device 63 will be operable to inhibit output of information stored in the memory space 61, wherein the identification program 611 won't be executed by the host system 60, but the host system 60 might load other residual memory space 613 stored in the memory space 61. The other residual memory space 613 is always available for the host system 60. If the specific signal 612 corresponds to the predetermined limit signal 601, then the memory space 61 will be completely available for the host system 60, wherein the host system 60 will execute the identification program 611. Certainly, the residual memory space 613 is available for the host system 60.

In practice, the host system could 60 further includes a limit register for storing the predetermined limit signal 601, and the host system 60 further includes means for altering the information stored in the limit register. In the present invention, the specific signal 612 is unchangeable after being defined in manufacturing of the flash memory. In this embodiment, the specific signal 612 can be stored in a file allocation table (FAT) of the flash memory6. Simply speaking, the memory space (byte) is adjustable and defined while the flash memory is manufactured. After being manufactured, the specific signal 612 for indicating a capacity of the flash memory space is fixed and unchangeable. The flash memory of the present invention could be applied in a mobile phone, and the identification program is not limited to an executable file (*.exe). The identification program of the present invention could be a specific format for the mobile phone. Accordingly, the program of the flash card won't be executable or loaded in a mobile phone of different brand without a specific program, thereby achieving the purpose of security system.

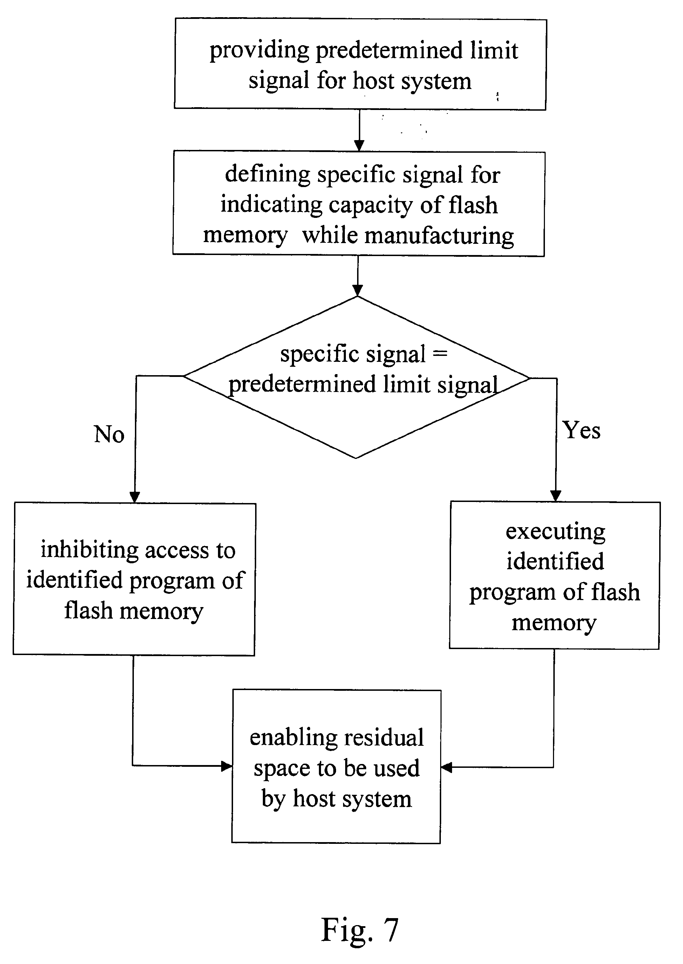

Please further refer to Fig. 7. It illustrates another embodiment of the method of a security system for a flash memory according to the present invention. The method of security system for the flash memory of Fig.6, includes the steps of a) providing a predetermined limit signal 601 for a host system 60; b) defining a specific signal 612 stored in the flash memory of Fig. 6 installed with a identification program 611 for indicating a capacity of the flash memory space 61; c) comparing the specific signal 612 with the predetermined limit signal 601 while the flash memory is connected to the host system 60; d) inhibiting access to the identification program 611 of the flash memory if the specific signal 612 does not correspond to the predetermined limit signal 601, but a residual space 613 of the flash memory is available. After executing the above steps, the host system 60 could operate and use the residual space 613.

In conclusion, the present invention provides a security system in a flash memory, which provides a specific space value for identifying by a host system, simplifies the identifying process, is capable of achieving the purpose of security system, and can rectify those drawbacks of the prior art and solve the above problems. Meanwhile the manufacturer could define specific value for their flash memory devices corresponding to a limited host system. The limited host system via the specific value of the memory space merely, thereby achieving the purpose of security system, could identify their flash memory devices. Meanwhile the prior art fail to disclose that. Accordingly, the present invention possesses many outstanding characteristics, effectively improves upon the drawbacks associated with the prior art in practice and application, produces practical and reliable products, bears novelty, and adds to economical utility value. Therefore, the present invention exhibits a great industrial value.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims, which are to be accorded with the broadest interpretation so as to encompass all such modifications and similar structures.

## Claims

1. A security system of a flash memory comprising:
a memory space (41) installed with an identification program (411) and stored with a specific signal (412) for indicating a capacity of said memory space (41);
a logic device (42) for determining if said specific signal corresponds to a predetermined limit signal of an external processor (44); and
an inhibit device (43) for inhibiting access to said identification program of said memory space (41) if a negative determination is made by said logic device (42).

2. The security system according to claim 1, wherein said logic device (42) is a comparator for comparing said specific signal with said predetermined limit signal of said external processor (44).

3. The security system according to claim 1 or claim 2, wherein said inhibit device (43) is operable to inhibit output of information stored in said memory space (41) when said negative determination is made by said logic device (42).

4. The security system according to any one of claims 1 to 3, wherein said external processor (44) further comprises a limit register for storing said predetermined limit signal.

5. The security system according to claim 4, wherein said external processor (44) further comprises means for altering the information stored in said limit register.

6. The security system according to any one of claims 1 to 3, wherein said specific signal is unchangeable after being defined in manufacturing of said flash memory.

7. The security system according to any one of claims 1 to 3, wherein said specific signal is stored in a file allocation table (FAT) of said flash memory.

8. A security system for a flash memory comprising:
a host system (60) having a predetermined limit signal (601);
a flash memory space (61) installed with an identification program (611) and stored with a specific signal (612) for indicating a capacity of said flash memory space (61);
a comparator (62) for comparing said specific signal with said predetermined limit signal (601) while said host system (60) and said flash memory are connected;
an inhibit device (63) for inhibiting access to said identification program of said flash memory space (61) if a negative determination is made by said comparator.

9. The security system according to claim 8, wherein said inhibit device (63) is operable to inhibit output of information stored in said flash memory space when said negative determination is made by said comparator (62).

10. The security system according to claim 8 or claim 9, wherein said host system (60) further comprises a limit register for storing said predetermined limit signal.

11. The security system according to claim 10, wherein said host system (60) further comprises means for altering the information stored in said limit register.

12. The security system according to any one of claims 8 to 11, wherein said specific signal is unchangeable after being defined in manufacturing of said flash memory.

13. The security system according to any one of claims 8 to 13, wherein said specific signal is stored in a file allocation table (FAT) of said flash memory.

14. A method of security system for a flash memory, comprising the steps of:
a) providing a predetermined limit signal (601) for a host system (60);
b) defining a specific signal (612) stored in said flash memory installed with a identification program (611) for indicating a capacity of said flash memory;
c) comparing said specific signal with said predetermined limit signal while said host system (60) and said flash memory (61) are connected;
d) producing a negative determination if said specific signal does not correspond to said predetermined limit signal; and
e) inhibiting access to said identification program (611) of said flash memory (61).

15. The method according claim 14, wherein said step (e) further comprises step el) inhibiting access output of information stored in said flash memory (61).

16. The method according to claim 14 or claim 15, wherein said specific signal is stored in a file allocation table (FAT) of said flash memory (61).

17. A method of security system for a flash memory, comprising the steps of:
a) providing a predetermined limit signal (601) for a host system (60);
b) defining a specific signal (612) stored in said flash memory (61) installed with a identification program (611) for indicating a capacity of said flash memory (61);
c) comparing said specific signal with said predetermined limit signal while said flash memory (61) is connected to said host system (60);
d) inhibiting access to said identification program (611) of said flash memory (61) if said specific signal does not correspond to said predetermined limit signal, but a residual memory (61) space of said flash memory is available.

18. The method according claim 17, wherein said specific signal is stored in a file allocation table (FAT) of said flash memory (61).
